# EUROPEAN PATENT APPLICATION

(11) **EP 4 593 358 A1**
(43) Date of publication of application: **30.07.2025**
(21) Application number: 23867541.7
(22) Date of filing: 20.09.2023
(51) Int. Cl.: H04L 67/60, H04L 41/14, H04L 41/0894

(54) **DATA ACQUISITION METHOD, APPARATUS AND SYSTEM, AND DEVICE**

(30) Priority: 20.09.2022 CN 202211146189
(71) Applicant: Vivo Mobile Communication Co., Ltd., Dongguan, Guangdong 523863 (CN)
(72) Inventor: CHENG, Sihan, Dongguan, Guangdong 523863 (CN); WU, Xiaobo, Dongguan, Guangdong 523863 (CN)
(74) Representative: Walaski, Jan Filip
(86) International application number: PCT/CN2023/119914
(87) International publication number: WO 2024/061254

(57) **Abstract**

The present application relates to the field of data processing, and discloses a data acquisition method, apparatus and system, and a device. The data acquisition method of embodiments of the present application comprises: a first network side device sends a first data acquisition request to a second network side device, the first data acquisition request being used for requesting target data, and the target data being used for determining performance information of a target model; the first network side device receives storage information from the second network side device, and acquires the target data according to the storage information; and the first network side device analyzes the target data to obtain the performance information of the target model.

## Description

### CROSS-REFERENCE TO RELATED APPLICATIONS

This application claims priority to Chinese Patent Application No. 202211146189.6, filed with the China National Intellectual Property Administration on September 20, 2022 and entitled "DATA RETRIEVAL METHOD AND APPARATUS, SYSTEM, AND DEVICE", which is incorporated herein by reference in its entirety.

### TECHNICAL FIELD

This application pertains to the field of data processing, and specifically, relates to a data retrieval method and apparatus, a system, and a device.

### BACKGROUND

In existing network and protocol standards, a device can perform model training on training data to obtain a target model corresponding to an analytics task. Then, based on the target model obtained through training, model inference is performed on input data of the analytics task, and output data of the target model is used as a model inference result of the analytics task. The model inference result can be used to assist devices inside and outside a network to make policy decisions so as to improve the intelligence degree of devices in making policy decisions.

It can be understood that if the accuracy rate of the model inference result is high and the devices inside and outside the network refer to the model inference result in making policy decisions, appropriate policy decisions can be made or appropriate operations can be performed. On the contrary, if the accuracy rate of the model inference result is low and the devices inside and outside the network refer to the model inference result in making policy decisions, it is likely that wrong policy decisions are made or inappropriate operations are performed. Therefore, in order to obtain correct policy decisions, it is necessary to ensure the accuracy of the model inference result.

However, in the above process, due to different distribution of training data and input data or insufficient generalization ability of the target model, the accuracy achieved by the target model in the training stage is usually lower than the accuracy that can be achieved by the target model in an actual model inference process. As a result, the accuracy rate of policy decisions made by the devices inside and outside the network based on the model inference result of the model is low.

### SUMMARY

Embodiments of this application provide a data retrieval method and apparatus, a system, and a device, which can solve the problem that accuracy achieved by a target model during training is usually lower than accuracy the target model can achieve in an actual model inference process, which results in a low accuracy rate of policy decisions made by devices inside and outside a network based on a model inference result of the target model.

According to a first aspect, an embodiment of this application provides a data retrieval method. The method includes:
sending, by a first network-side device, a first data retrieval request to a second network-side device, where the first data retrieval request is used to request target data, and the target data is used for determining performance information of a target model;
receiving, by the first network-side device, storage information from the second network-side device, and retrieving the target data based on the storage information; and
analyzing, by the first network-side device, the target data to obtain the performance information of the target model.

According to a second aspect, an embodiment of this application provides another data retrieval method. The method includes:
receiving, by a second network-side device, a first data retrieval request from a first network-side device, where the first data retrieval request is used to request target data, and the target data is used for determining performance information of a target model; and
sending, by the second network-side device, storage information to the first network-side device, where the storage information is used to indicate the first network-side device to retrieve the target data.

According to a third aspect, an embodiment of this application provides a data retrieval apparatus including:
a request module configured to send a first data retrieval request to a second network-side device, where the first data retrieval request is used to request target data, and the target data is used for determining performance information of a target model;
a retrieval module configured to receive storage information from the second network-side device, and retrieve the target data based on the storage information; and
an analysis module configured to analyze the target data to obtain the performance information of the target model.

According to a fourth aspect, an embodiment of this application provides another data retrieval apparatus including:
a receiving module configured to receive a first data retrieval request from a first network-side device, where the first data retrieval request is used to request target data, and the target data is used for determining performance information of a target model; and
a sending module configured to send storage information to the first network-side device, where the storage information is used to indicate the first network-side device to retrieve the target data.

According to a fifth aspect, an embodiment of this application provides a data retrieval system, including a first network-side device and a second network-side device, where
the first network-side device sends a first data retrieval request to the second network-side device, where the first data retrieval request is used to request target data, and the target data is used for determining performance information of a target model;
the second network-side device receives the first data retrieval request and sends storage information to the first network-side device, where the storage information is used to indicate the first network-side device to retrieve the target data;
the first network-side device receives the storage information, and retrieves the target data based on the storage information; and
the first network-side device analyzes the target data to obtain the performance information of the target model.

According to a sixth aspect, an embodiment of this application provides a data retrieval system, including a first network-side device, a second network-side device, and a third network-side device, where
the first network-side device sends a first data retrieval request to the second network-side device, where the first data retrieval request is used to request target data, and the target data is used for determining performance information of a target model;
the second network-side device receives the first data retrieval request, and sends storage information to the first network-side device;
the first network-side device receives the storage information, and retrieves the target data from the third network-side device based on the storage information; and
the first network-side device analyzes the target data to obtain the performance information of the target model.

According to a seventh aspect, a device is provided. The device includes a processor and a memory. The memory stores a program or an instruction capable of running on the processor. When the program or instruction is executed by the processor, the steps of the method according to the first aspect and/or the second aspect are implemented.

According to an eighth aspect, a communication device is provided including a processor and a memory. The memory stores a program or an instruction capable of running on the processor. When the program or instruction is executed by the processor, the steps of the method according to the first aspect and/or the second aspect are implemented. The communication device is a network-side device or a terminal device.

According to a ninth aspect, a readable storage medium is provided. The readable storage medium stores a program or an instruction. When the program or instruction is executed by a processor, the steps of the method according to the first aspect and/or the second aspect are implemented.

According to a tenth aspect, a chip is provided. The chip includes a processor and a communication interface, the communication interface is coupled to the processor, and the processor is configured to run a program or an instruction to implement the method according to the first aspect and/or the second aspect.

According to an eleventh aspect, a computer program/program product is provided. The computer program/program product is stored in a storage medium, and the computer program/program product is executed by at least one processor to implement the steps of the method according to the first aspect and/or the second aspect.

In the embodiments of this application, the first network-side device sends the first data retrieval request to the second network-side device, where the first data retrieval request is used to request the target data. The second network-side device sends the storage information to the first network-side device. The first network-side device retrieves the target data based on the storage information and analyzes the target data to obtain the performance information of the target model.

In this way, the first network-side device can obtain the storage information of the target data from the second network-side device, then retrieve the target data, and analyze the target data to obtain the performance information of the target model. Then, accuracy of the target model in a current actual inference process can be determined, so as to adjust subsequent target model-based policy decision making, thereby increasing the accuracy rate of policy decisions made by devices inside and outside a network based on a model inference result of the target model.

### BRIEF DESCRIPTION OF DRAWINGS

FIG. 1 is a block diagram of a wireless communication system to which embodiments of this application can be applied.
FIG. 2 is an implementation flowchart of a data retrieval method in an embodiment of this application;
FIG. 3 is a flowchart of a specific example of data retrieval in an embodiment of this application;
FIG. 4 is a flowchart of another specific example of data retrieval in an embodiment of this application;
FIG. 5 is an implementation flowchart of another data retrieval method in an embodiment of this application;
FIG. 6 is a schematic structural diagram of a data retrieval apparatus corresponding to FIG. 2 in an embodiment of this application;
FIG. 7 is a schematic structural diagram of a data retrieval apparatus corresponding to FIG. 5 in an embodiment of this application;
FIG. 8 is a schematic diagram of a data retrieval system in an embodiment of this application;
FIG. 9 is a schematic diagram of another data retrieval system in an embodiment of this application;
FIG. 10 is a schematic structural diagram of a network-side device in an embodiment of this application; and
FIG. 11 is another schematic structural diagram of a network-side device in an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish between objects of a same type and do not limit the quantity of objects. For example, there may be one or a plurality of first objects. In addition, "and/or" in the specification and claims represents at least one of the connected objects, and the character "/" generally indicates that the contextually associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6^{th} generation (6^{th} Generation, 6G) communication system.

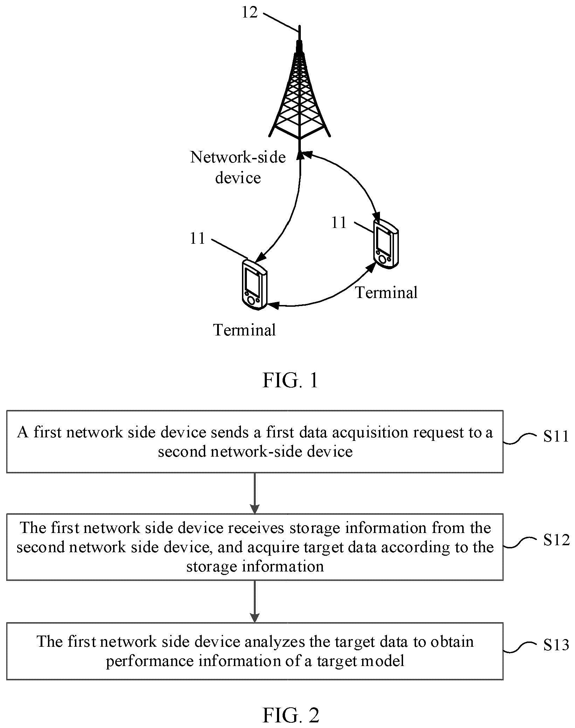

FIG. 1 is a block diagram of a wireless communication system to which the embodiments of this application may be applicable. The wireless communication system includes a terminal 11 and a network-side device 12. The terminal 11 can be a terminal side device such as a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home appliance with wireless communication function, such as a refrigerator, a television set, a washing machine, or a furniture), a game console, a personal computer (personal computer, PC), a teller machine, or a self-service machine. The wearable device includes a smartwatch, a smart band, a smart headphone, smart glasses, smart jewelry (a smart bracelet, a smart wrist-band, a smart ring, a smart necklace, a smart anklet, a smart ankle bracelet, or the like), a smart wristband, smart clothing, or the like. It should be noted that a specific type of the terminal 11 is not limited in the embodiments of this application. The network-side device 12 can include an access network device or core network device, where the access network device 12 can also be referred to as a radio access network device, radio access network (Radio Access Network, RAN), radio access network function, or radio access network unit. The access network device 12 can include a base station, a WLAN access point, a WiFi node, or the like. The base station can be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or some other appropriate term in the art. As long as the same technical effect is achieved, the base station is not limited to a specific technical term. It should be noted that the base station in the NR system is used only as an example in the embodiments of this application, and a specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and the specific type of the core network device is not limited.

For ease of understanding, the application scenarios, and related technologies and concepts used in the embodiments of this application are first described.

The embodiments of this application can be applied to scenarios where artificial intelligence/machine learning models, such as using a target model to perform an analytics task. The target model is a model that is selected or trained to meet requirements of the analytics task. In an actual use phase, corresponding input data is input into the target model to obtain corresponding output data, that is, a data analysis result corresponding to the analytics task. The data analysis result can include prediction information for a future time period or time point, or include summary information of historical data for a previous time period or time point. The accuracy of the data analysis result can be determined by using performance information of the target model in the actual use phase.

As described in background, a network data analysis function can perform intelligent data analysis on a specific task and generate a data analysis result. The data analysis result can assist devices inside and outside a communication network in making policy decisions. The network data analysis function can be divided into two network elements: an analytics logical function (Analytics Logical Function, AnLF) and a model training logical function (Model Training Logical Function, MTLF).

The analytics logical function can perform inference to generate prediction information or generate summary information of historical data, such as providing an inference analysis service in response to a consumer request.

The model training logical function can generate a model and perform model training, such as providing an artificial intelligence/machine learning model training services in response to a consumer request.

In a specific example, an interaction process between the analytics logical function (AnLF) and the model training logical function (MTLF) is as follows:
The AnLF can call an ML model information request, such as Nnwdaf_MLModelInfo_Request, to request information about one or one group of ML models associated with one or one group of task identifiers from the MTLF. The AnLF uses ML model information for data analysis.

After receiving the ML model information request sent by AnLF, the MTLF can determine whether an existing ML model can be used for the request or whether an existing ML model needs further training. If further training is needed, the MTLF initiates a data collection operation to collect data from network-side devices such as a network function (Network Function, NF), an application function (Application Function, AF), or an operation administration and maintenance (Operation Administration and Maintenance, OAM), and uses the data for ML model training. The network function can be an AMF, a data collection coordination function (Data Collection Coordination Function, DCCF), an analytics data repository function (Analytics Data Repository Function, ADRF), and the like.

The MTLF can provide ML model information to the AnLF by calling an ML model information request response, such as Nnwdaf_MLModelInfo_Request response. The ML model information includes information such file address of one or one group of ML models.

In another specific example, an interaction process between a network data analysis function (NWDAF) and an analytics data repository function (ADRF) is as follows:
The NWDAF can send a data and/or analysis result to the ADRF by calling a data management storage request, such as Nadrf_DataManagement StorageRequest.

The ADRF stores the data and/or analysis result sent by the NWDAF. The ADRF can determine whether a same data and/or analysis result has been stored or is being stored based on the data and/or analysis result sent by the NWDAF. If the ADRF has already stored or is storing the same data and/or analysis result, the ADRF can decide not to store the data and/or analysis result sent by the NWDAF.

The ADRF sends storage information of the data and/or analysis result to the NWDAF by calling a data management storage request response, such as Nadrf_DataManagement _StorageRequest response.

The above interaction process between the NWDAF and the ADRF is also applicable to an interaction process between a DCCF, a messaging framework adaptor function (Messaging Framework Adaptor Function, MFAF), and the ADRF.

As can be seen from the above description, the MTLF is mainly used to generate an AI/ML model, perform model training, and provide the trained model to the AnLF. The AnLF puts the model into actual use for inference to obtain prediction information or generate summary information of historical data. The ADRF is mainly used for data storage. For any one AI/ML model, the accuracy that the model can achieve at different stages may vary. That is, the accuracy that the model can achieve in a training phase may differ from the accuracy that the model can achieve in an actual use phase. Factors such as different data distribution at different stages and insufficient generalization ability of the model may lead to differences in the accuracy that the model can achieve at different stages. In general, the accuracy that a model can achieve in an actual use phase is lower than the accuracy the model can achieve in a training phase.

Therefore, the AnLF needs to know the performance information of the model in an actual use phase, so as to determine the accuracy of the data analysis result of the model in the actual use phase based on the performance information. This ensures that in a case that the accuracy of the data analysis result is high, the result can be provided to devices inside and outside a communication network to assist in making policy decisions, thereby ensuring correct policy decision making for the devices inside and outside the communication network.

The above has described the application scenarios, and related technologies and concepts used in the embodiments of this application. The following describes the data retrieval method provided in the embodiments of this application in detail with reference to the accompanying drawings through some embodiments and application scenarios thereof.

FIG. 2 is a step flowchart of a data retrieval method of this application, which specifically includes the following steps.

Step S11: A first network-side device sends a first data retrieval request to a second network-side device.

In this embodiment of this application, the first network-side device can be any network-side device capable of performing detection on performance information of a target model. In an embodiment, the first network-side device includes a model training logical function MTLF. The second network-side device can be any network-side device that obtains the target model, and has the need to use the target model to perform actual data analysis. In an embodiment, the second network-side device includes an analysis logical function AnLF. The first data retrieval request is used to request target data.

In this step, the first network-side device sends the first data retrieval request to the second network-side device, to inform the second network-side device that it is going to analyze performance information of a target model during actual use and needs target data required for analyzing the performance information of the target model, so as to request the second network-side device to help it to prepare the target data.

The target data is used to determine the performance information of the target model and can include any one or more of input data (input data), output data (output data), and label data (label/label data) of the target model during actual use. The input data is input data that is used for inference and that is input into the target model in a use or inference process of the target model. The output data is output data/prediction value/inference data/the like obtained by performing calculation/prediction/inference on a set of input data in the target model, and can be a prediction (prediction), or inference data or inference result data (inference data). The label data includes actually generated data associated with the input data and/or output data corresponding to the target model and can be a ground truth (ground truth), that is, a correct label value, which can be understood as an actual measured value in a real environment.

For example, the target data can include the label data corresponding to the target model, and the input data and/or output data corresponding to the target model. That is, the target data can include the label data corresponding to the target model and the input data corresponding to the target model, or the target data can include the label data corresponding to the target model and the output data corresponding to the target model, or the target data can include the label data corresponding to the target model, the input data corresponding to the target model, and the output data corresponding to the target model.

For example, the input data corresponding to the target model is location data of terminals in a cell within a set time period. An analytics task corresponding to the target model is to predict the number of terminals in the cell within the next week. The input data is input into the target model to obtain the corresponding output data, and the output data is prediction information of the number of terminals in the cell within the next week. After one week, the actual number of terminals in the cell can be obtained. The actual number of terminals can be used as the label data corresponding to the target model. The label data is associated with the corresponding input data and output data.

The first network-side device can send the first data retrieval request to the second network-side device under different circumstances. For example, in an embodiment, the first network-side device can send the first data retrieval request to the second network-side device after receiving a model retrieval request for the target model from any one device. That is, the first network-side device can send the first data retrieval request to the second network-side device in a case that another device requests the target model from it, and then analyze the target data to determine whether a current target model can be sent to the another device for use.

Alternatively, in an embodiment, the first network-side device can send the first data retrieval request to the second network-side device after a preset duration elapses after the target model is sent to the second network-side device. That is, the first network-side device can send the first data retrieval request to the second network-side device after the target model has been used for an excessively long time, and then analyze the target data to determine whether performance information of a current target model is suitable for continued use or whether a current target model needs to be updated, so as to improve the accuracy of the target model.

In addition, in an embodiment, the first network-side device can send the first data retrieval request to the second network-side device according to a preset period. That is, the first network-side device can periodically trigger the sending of the first data retrieval request to the second network-side device, and then analyze the target data to periodically perform detection for the performance information of the target model, thereby updating the target model in a timely manner to improve the accuracy of the target model.

In this application, the first data retrieval request carries at least one of the following:
(1) Identification information of an analytics task corresponding to the target model, such as Analytics ID, used to indicate the analytics task specific to the target data.
(2) Condition limiting information of the analytics task, such as analytic filter information, used to indicate a limiting condition of target data of the analytics task, such as filtering the target data of the analytics task based on area of interest (Area Of Interest, AOI), single network slice selection assistance information (Single Network Slice Selection Assistance information, S-NSSAI), or data network name (Data Network Name, DNN).
(3) Object information corresponding to the analytics task, such as target of analytic reporting, used to indicate an analysis object of the analytics task, which can be a terminal, multiple terminals, or all terminals.
(4) Model identification information corresponding to the target model, such as Model ID, used to indicate that the target data is for a specific model. In this embodiment of this application, a model specific to the target data is the target model.
(5) Data type information of the target data, used to indicate which type of target data is to be retrieved, such as retrieving target data of a terminal location information type.
(6) Time information of the target data, used to indicate target data in which time period is to be retrieved. The time information can include a start time point and an end time point for retrieving the target data. For example, by generation time of data, it can indicate to use data whose generation time is between the start time point and the end time point as the target data.
(7) Location information of the target data, used to indicate target data in which location range is to be retrieved. For example, by location where data is generated, it can indicate to retrieve target data within the location range, such as target data within a tracking area (Tracking Area, TA) or a cell (cell).
(8) First indication information, used to indicate a collection source of the target data expected by the first network-side device, that is, a device from which the first network-side device retrieves the target data. The collection source of the target data includes any one or more of the second network-side device, a third network-side device, and a fourth network-side device. The third network-side device is used to store the target data and can be any storage network element that stores the target data, such as an ADRF. The fourth network-side device is a data source of the target data and can be a data source network element or database of the target model, which is not specifically limited.

In addition, the first data retrieval request may further carry second indication information, used to indicate (indicate) that the first network-side device requests to retrieve the target data. The second indication information can be explicit, such as being carried in a specific information element; or can be implicit, such as being expressed through the name of the first data retrieval request. After receiving the first data retrieval request sent by the first network-side device, the second network-side device can know, based on the second indication information included in the first data retrieval request, that the first network-side device has a request to retrieve the target data used to analyze the performance information of the target model, and can then perform a corresponding operation.

Step S12: The first network-side device receives storage information from the second network-side device, and retrieves the target data based on the storage information.

In this embodiment of this application, after receiving the first data retrieval request sent by the first network-side device, the second network-side device can send the storage information to the first network-side device. The storage information can be for the target model, the target task corresponding to the target model, or the target data, and is used to indicate the first network-side device to retrieve the target data. The target data can be stored in the second network-side device itself, or can be stored in another device, such as the fourth network-side device corresponding to the target model or the third network-side device that stores the target data. In this way, the first network-side device can retrieve the target data from different devices under different circumstances.

For example, in an embodiment, the step of sending, by the second network-side device, the storage information to the first network-side device can include: retrieving, by the second network-side device, the target data; and sending, by the second network-side device, the storage information to the first network-side device, where the storage information includes the target data.

For example, in a case that the first data retrieval request carries the first indication information and the first indication information indicates that the collection source of the target data includes the second network-side device, the above implementation can be used or the second network-side device can determine by itself whether to use the above implementation. The step of retrieving, by the second network-side device, the target data can include: determining, by the second network-side device based on task information sent by user equipment, the fourth network-side device corresponding to the target model, where the task information is used to indicate the first network-side device to perform training to obtain the target model; and then, retrieving, by the second network-side device, the target data from the fourth network-side device. For example, the task information can include condition limiting information, identification information, object information, and the like of the analytics task. In this way, the second network-side device can determine the fourth network-side device based on the task information, retrieve the target data from the fourth network-side device, and directly send the target data to the first network-side device.

The user equipment is a consumer network element, such as SMF, AMF, UPF, and PCF, and can send a task request to the second network-side device based on an actual need. The task request includes the task information, and is used to request execution of any one analytics task to obtain a data analysis result of the analytics task. After receiving the task request, the second network-side device can obtain the target model used for executing the analytics task. For example, it can send a model request to the first network-side device. The model request is used to request to obtain the target model. After selecting or training the target model that meets an execution requirement of the analytics task, the first network-side device sends it to the second network-side device. After retrieving the target model, the second network-side device can put the target model into actual use. In the actual use phase, output data corresponding to input data of the analytics task can be obtained based on the target model and corresponding input data.

That is, after receiving the first data retrieval request, the second network-side device can determine, based on the task information, the fourth network-side device corresponding to the target model, and then retrieve the target data from the fourth network-side device, such as the input data and/or label data corresponding to the target model. Then, the target data is sent to the first network-side device through the storage information, or the first network-side device can retrieve the target data from the second network-side device based on the storage information.

In another implementation, the step of sending, by the second network-side device, the storage information to the first network-side device can include: retrieving, by the second network-side device, the target data; and storing, by the second network-side device, the target data to the third network-side device corresponding to the target data, and sending the storage information to the first network-side device, where the storage information includes indication information of the third network-side device.

For example, in a case that the first data retrieval request carries the first indication information and the first indication information indicates that the collection source of the target data includes the third network-side device storing the target data, the above implementation can be used or the second network-side device can determine by itself whether to use the above implementation. In this way, the first network-side device can determine the third network-side device based on the storage information, and then retrieve the target data from the third network-side device.

That is, after retrieving the target data, the second network-side device can store the target data to the third network-side device used to store the target data, and then send the indication information of the third network-side device to the first network-side device, so that the first network-side device can retrieve the target data from the third network-side device.

The step of storing, by the second network-side device, the target data to the third network-side device can include: sending, by the second network-side device, data storage indication information to the third network-side device, where the data storage indication information carries the target data; and receiving, by the second network-side device, storage identification information returned by the third network-side device, where the storage identification information is used for indicating successful storage of the target data and retrieving the target data.

That is, the second network-side device stores the target data to the third network-side device through the data storage indication information. After successfully storing the target data, the third network-side device returns the storage identification information to the second network-side device to inform the second network-side device that the target data has been successfully stored to the third network-side device. In addition, the second network-side device can also retrieve the target data based on the storage identification information. For example, the storage identification information can include an index or the like of the target data.

In this embodiment of the application, the data storage indication information carries at least one of the following:
(1) Input data corresponding to the target model.
(2) Output data corresponding to the target model.
(3) Label data corresponding to the target model.
(4) Time information corresponding to the input data. For example, the time information corresponding to the input data can include at least one of time point information indicating when the input data is generated, time point information indicating when the input data is obtained by the second network-side device, and time point information indicating when the input data is input into the target model.
(5) Time information corresponding to the output data. For example, the time information corresponding to the output data can include at least one of time point information indicating when the output data is generated, target time point information specific to the output data, and time information corresponding to the input data associated with the output data.
(6) Time information corresponding to the label data. For example, the time information corresponding to the label data can include at least one of time point information indicating when the label data is generated and time point information indicating when the label data is retrieved by the second network-side device.

A time point when the output data is generated can be the same as a time point when the input data is input into the target model, or a time point when the input data is input into the target model and the target model completes calculation and generates the output data. A target time point specific to the output data can be a time point corresponding to prediction information included in the output data. For example, if the prediction information included in the output data is the number of terminals in a cell after one week, the target time point is one week later. At the target time point, the label data is correspondingly generated. The output data can be associated with the label data based on the target time point specific to the output data and the time point when the label data is generated.

The time information corresponding to the input data associated with the output data can include at least one of the time point information indicating when the input data associated with the output data is generated, the time point information indicating when the input data associated with the output data is retrieved by the second network-side device, and the time point information indicating when the input data associated with the output data is input into the target model. The output data can be associated with the input data based on the time information corresponding to the output data associated with the output data.

(7) Identification information of an analytics task corresponding to the target model.

(8) Condition limiting information of the analytics task.

(9) Object information corresponding to the analytics task.

(10) Model identification information corresponding to the target model.

(11) Model filtering information corresponding to the target model, used to indicate a filtering condition that the target model needs to meet, such as AOI, S-NSSAI, or DNN.

In addition, the step of storing, by the second network-side device, the target data to the third network-side device corresponding to the target model can further include: sending, by the second network-side device, data retrieval indication information to the third network-side device, where the data retrieval indication information is used to indicate the third network-side device to request the target data from the fourth network-side device; and receiving, by the second network-side device, retrieval identification information returned by the third network-side device, where the retrieval identification information is used to indicate that the third network-side device has retrieved the target data from the fourth network-side device and stored the target data.

That is, the second network-side device informs, through the data retrieval indication information, the third network-side device of the fourth network-side device that stores the target data. Then, the third network-side device retrieves the target data from the fourth network-side device, and after successfully storing the target data, returns the retrieval identification information to the second network-side device to inform the second network-side device that the target data has been successfully stored to the third network-side device.

In this embodiment of the application, the data retrieval indication information carries at least one of the following:
(1) identification information of the fourth network-side device, for example, ID of the fourth network-side device, used to indicate a data source of the target data;
(2) address information of the fourth network-side device, for example, an IP address or fully qualified domain name (Fully Qualified Domain Name, FQDN) of the fourth network-side device, used to indicate how to establish a connection with the fourth network-side device;
(3) data type information of the target data;
(4) time information of the target data;
(5) location information of the target data; and
(6) collection time information of the target data.

That is, the second network-side device can be responsible for collecting all target data and then directly storing all the target data to the third network-side device. Alternatively, the second network-side device cannot be responsible for collecting target data, but send the indication information of the fourth network-side device that stores the target data to the third network-side device, and then the third network-side device retrieves the target data from the fourth network-side device.

In addition, in an embodiment, the above two manners can also be carried out simultaneously. That is, the second network-side device is responsible for collecting part of the target data, and then sends the collected target data and the indication information of the fourth network-side device to the third network-side device corresponding to the target model. The third network-side device retrieves another part of the target data from the fourth network-side device.

In both of the above implementations, the second network-side device retrieves the target data from the fourth network-side device. Furthermore, the second network-side device can process the retrieved target data. For example, in a case that the target data includes the output data of the target model, the second network-side device retrieving the target data from the fourth network-side device includes: the second network-side device retrieving the input data of the target model from the fourth network-side device; and the second network-side device inputting the input data into the target model for processing to obtain the corresponding output data.

In another implementation, the step of sending, by the second network-side device, the storage information to the first network-side device can include: sending, by the second network-side device, the storage information to the first network-side device, where the storage information includes the indication information of the fourth network-side device; or sending, by the second network-side device, the storage information to the first network-side device, where the storage information includes task information sent by user equipment; where the task information is used to indicate the first network-side device to perform training to obtain the target model.

For example, in a case that the first data retrieval request carries the first indication information and the first indication information indicates that the collection source of the target data includes the fourth network-side device corresponding to the target model, the above implementation can be used or the second network-side device can determine by itself whether to use the above implementation. The second network-side device can obtain the indication information of the fourth network-side device based on the task information sent by the user equipment. In this way, the first network-side device can determine the fourth network-side device based on the storage information, and then retrieve the target data from the fourth network-side device.

That is, the first network-side device can determine the fourth network-side device based on the storage information, and then retrieve the target data from the fourth network-side device. For example, the second network-side device can directly send the indication information of the fourth network-side device to the first network-side device. Alternatively, the second network-side device can send the task information to the first network-side device, and the first network-side device obtains and determines the information of the fourth network-side device from the task information. This is not specifically limited.

In this embodiment of this application, the storage information carries at least one of the following:
(1) identification information of the third network-side device, for example, ID of the third network-side device, used to indicate which third network-side device the target data is stored in;
(2) address information of the third network-side device, for example, an IP address or fully qualified domain name (Fully Qualified Domain Name, FQDN) of the third network-side device, used to indicate to the first network-side device how to establish a connection with the third network-side device;
(3) identification information of the second network-side device, for example, ID of the second network-side device; and
(4) storage identification information of the target data, for example, a storage transaction identifier, returned by the third network-side device to the second network-side device, and used to indicate that the target data has been successfully stored to the third network-side device. It can be used in combination with the identification information of the third network-side device to more accurately retrieve the target data, and it can specifically be information such as an index.

In an embodiment, the first network-side device can alternatively receive association information from the second network-side device, and can retrieve the target data more accurately based on the storage information and association information. The association information includes at least one of the following:
(1) identification information of an analytics task corresponding to the target model;
(2) condition limiting information of the analytics task, indicating a limiting condition of target data of the analytics task;
(3) object information corresponding to the analytics task;
(4) model identification information corresponding to the target model;
(5) model filtering information corresponding to the target model;
(6) data type information of the target data;
(7) time information of the target data; and
(8) location information of the target data.

For example, in the second network-side device, the third network-side device, or the fourth network-side device, besides the target data, a large amount of other data may also be stored. The first network-side device needs to retrieve the target data from the large amount of data. Therefore, the information carried in the storage information needs to have the function of indicating the target data. In this way, after retrieving the storage information, the first network-side device can accurately retrieve the target data from the large amount of data based on the information carried in the storage information, such as the data type information, time information, and location information of the target data. These data may all be data related to the target model, and for example, can be output data of the target model over a long period of time. The first network-side device can determine the target data from these output data based on the time information of the target data carried in the storage information. Alternatively, these data can further include data unrelated to the target model. The first network-side device can determine the target data from these data based on the time information, location information, and data type information of the target data carried in the storage information; and the like. This is not specifically limited.

In addition, in an embodiment, the first network-side device can alternatively receive requirement information from the second network-side device, and can determine a to-be-performed subsequent step based on the requirement information. The requirement information is used to indicate a minimum requirement for the performance information of the target model. For example, the requirement information can be information such as a threshold or a condition. The second network-side device can inform, through the requirement information, the first network-side device of a case in which the performance information of the target model is acceptable. After the first network-side device analyzes the target data and obtains the performance information of the target model, if the performance information does not meet the requirement information, some subsequent operations can be triggered, such as retraining the target model, reselecting a target model, informing the second network-side device that the performance of the target model, declines or does not meet expectations. Conversely, if the performance information of the target model can meet the requirement information, other operations can be triggered, such as informing the second network-side device that the performance of the target model meets expectations, or no subsequent operations can be performed, such as not needing to update the target model or reselecting the target model. In an embodiment, the requirement information can alternatively be carried in a model retrieval request sent by the second network-side device to the first network-side device.

In an embodiment, if the storage information carries the identification information and/or address information of the third network-side device, the step of retrieving, by the first network-side device, the target data based on the storage information can include: determining, by the first network-side device, the third network-side device based on the storage information; sending, by the first network-side device, a second data retrieval request for the target data to the third network-side device; and receiving, by the first network-side device, the target data returned by the third network-side device.

That is, the first network-side device can determine the third network-side device based on the storage information, and then send the second data retrieval request to the third network-side device that stores the target data to retrieve the target data. In addition, the target data can also be stored in the fourth network-side device. The process of the first network-side device retrieving the target data from the fourth network-side device based on the storage information is similar to the process of retrieving the target data from the third network-side device described above, and is not repeated herein again.

The second data retrieval request carries at least one of the following:
(1) identification information of the second network-side device, for example, ID of the second network-side device, used to indicate which device stores the target data in the third network-side device;
(2) storage identification information of the target data;
(3) identification information of an analytics task corresponding to the target model;
(4) condition limiting information of the analytics task, indicating a limiting condition of target data of the analytics task;
(5) object information corresponding to the analytics task;
(6) model identification information corresponding to the target model;
(7) data type information of the target data;
(8) time information of the target data; and
(9) location information of the target data.

In another implementation, the storage information carries the target data. The step of retrieving, by the first network-side device, the target data based on the storage information can include: retrieving, by the first network-side device, the target data from the storage information. In other words, the second network-side device can directly send the target data to the first network-side device through the storage information.

The type of information carried in the storage information, or a device from which the first network-side device retrieves the target data can be determined based on the first indication information carried in the first data retrieval request sent by the first network-side device, or can be determined by the second network-side device by itself. Specifically, in a case that the first indication information indicates that the collection source of the target data expected by the first network-side device includes the fourth network-side device and/or the third network-side device, the storage information returned by the second network-side device can carry the information of the fourth network-side device and/or the third network-side device, such as identification information and/or address information. In this way, the first network-side device can retrieve the target data from the fourth network-side device and/or the third network-side device. In a case that the first indication information indicates that the collection source of the target data expected by the first network-side device includes the second network-side device, the storage information returned by the second network-side device can carry the target data stored in the second network-side device. That is, the second network-side device directly sends the target data to the first network-side device.

In an embodiment, the storage information further carries time period information, the time period information is used to indicate a retrieval time and/or retrieval time range of the target data, and the step of retrieving, by the first network-side device, the target data based on the storage information includes: retrieving, by the first network-side device based on the storage information, the target data at a time corresponding to the time period information. For example, because the target data is performance information that is of a future period, and only the performance information for this period is needed, the time information may indicate the first network-side device to collect the information once after this time. For another example, if data of a time period is needed for multiple calculations of model performance, the time period can be a long time range. The information can be determined by the second network-side device itself or indicated in the request received by the second network-side device from the first network-side device.

Step S13: The first network-side device analyzes the target data to obtain the performance information of the target model.

After retrieving the target data, the first network-side device can analyze the target data to determine the performance information of the target model within a time corresponding to the target data, and determine a subsequent action based on the performance information. For example, the first network-side device can calculate the performance information of the target model by comparing the label data and the output data, and then determine, based on the performance information, whether the target model needs to be retrained or a new target model needs to be selected. Alternatively, the first network-side device can compare the label data and the output data to determine whether to feed back the performance information to the second network-side device. Alternatively, after calculating the performance information of the target model, the first network-side device can inform the second network-side device of the performance information, or periodically feed back the performance information of the target model to the second network-side device, or the like.

For example, after the first network-side device analyzes the target data and obtains the performance information of the target model, the first network-side device can send the target model to any one device requesting the target model in a case that the performance information meets a preset condition. Conversely, if the performance information does not meet the preset condition, the first network-side device can retrain the target model and provide the retrained target model to another device requesting the target model for actual use. Alternatively, the first network-side device can select a new target model and provide the new target model to another device for actual use.

The performance information meeting the preset condition can mean that the performance information of the target model meets the requirement information of the performance information of the target model carried in the storage information. For example, the performance information of the target model can refer to a difference between the output data and the label data of the target model. In a case that the difference is less than a preset difference in the requirement information, it can be considered that the performance information meets the preset condition. Alternatively, the performance information can refer to a variance between the output data of the target model. In a case that the variance is less than a preset variance in the requirement information, it indicates that the output data is relatively stable, and it can be considered that the performance information meets the preset condition. Alternatively, the preset condition can also be determined by the first network-side device and is not related to the requirement information carried in the storage information. This is not specifically limited.

In addition, after the first network-side device analyzes the target data and obtains the performance information of the target model, the first network-side device can update a model parameter of the target model based on the performance information, thereby improving the accuracy of the model in the actual use phase.

In this embodiment of this application, the time information corresponding to the target data can help the first network-side device analyze the target data. For example, the output data of the model and the label data corresponding to the output data can be bound or mapped by comparing the time information corresponding to the output data and the time information corresponding to the label data to obtain the performance information of the target model. In addition, time range information of these data can be known through the time information corresponding to the input data. The time range information refers to a certain time range. For example, if the time information corresponding to the input data indicates an earliest time of Monday of a certain week and a latest time of Friday of that week, it indicates that a time range of these data is from Monday to Friday of a certain week. This time range can be used to record and ensure the timeliness and the like of the model performance.

In one embodiment of this application, the target data can include the label data corresponding to the target model, and the input data and/or output data corresponding to the target model. The analyzing, by the first network-side device, the target data to obtain the performance information of the target model can include: comparing, by the first network-side device, each piece of output data with associated label data to obtain a comparison result; and determining, by the first network-side device, the performance information of the target model based on the comparison result.

In an embodiment, after the first network-side device retrieves the target data, if the target data includes the label data corresponding to the target model and the input data corresponding to the target model, the first network-side device can obtain the output data corresponding to the target model based on the target model and the input data corresponding to the target model. If the target data includes the label data corresponding to the target model and the output data corresponding to the target model, or the target data includes the label data corresponding to the target model, the input data corresponding to the target model, and the output data corresponding to the target model, the first network-side device retrieving the target data means that the output data corresponding to the target model has been obtained.

An association relationship between the output data and the label data can be determined based on the time information of the output data corresponding to the target model and the label data corresponding to the target model. The first network-side device can compare each piece of output data with associated label data to obtain the comparison result. The accuracy rate of each piece of output data with respect to the associated label data can be known based on the comparison result, thereby determining the performance information of the target model. The first network-side device feeds back the performance information of the target model to the second network-side device, and the second network-side device can determine a further operation based on the performance information.

In an embodiment, after the analyzing, by the first network-side device, the target data to obtain the performance information of the target model, the method further includes:
feeding back, by the first network-side device, the performance information to the second network-side device in a case that the performance information does not meet a model performance requirement corresponding to model performance requirement information.

In an embodiment, the performance information of the target model includes accuracy rate. Specifically, the model performance information of the target model can be used to indicate the correctness and/or error degree of the inference result of the target model during actual inference. The model performance information can take various forms, such as specific percentage value, for example, 90%, or it can also be expressed in categorical form, such as high, medium, and low, or it can be normalized data, for example, 0.9. The embodiments of this application do not specifically limit the form of the model performance information. The model performance information of the target model can indicate the accuracy or error degree of an inference result of the target model made for a target task from a positive or negative perspective. For example, the inference accuracy of the target model can be indicated from the negative perspective by calculating an inference error or inference error rate of the target model. The calculation method of the inference error or inference error rate can be various, for example, mean absolute error (Mean Absolute Error, MAE), or mean square error (Mean Absolute Error, MSE).

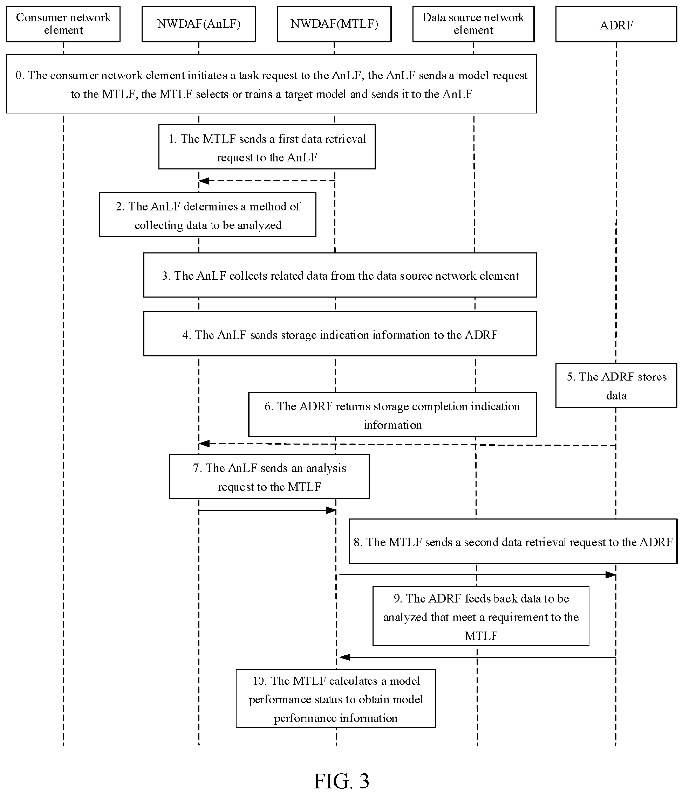

For ease of understanding, the following uses the second network-side device being an AnLF, the first network-side device being an MTLF, the third network-side device being an ADRF, and the fourth network-side device being a data source network element as an example to describe the embodiments of this application again with the specific example shown in FIG. 3:

Step 0 is a related process of task initiation, model selection, and model issuance. Specifically, a consumer network element (consumer NF) initiates a task request to the AnLF, to request a task result of an analytics task. The AnLF sends a model request to the MTLF, to request a target model used to perform the analytics task. The MTLF selects or trains a target model that meets an execution requirement of the analytics task and sends it to the AnLF.

Step 1: The MTLF sends a first data retrieval request to the AnLF, to inform the AnLF that it is going to calculate performance information of the target model during actual use and needs related target data, and hence it requests the AnLF help prepare the target data.

The target data can include input data (input data), output data (output data), and label data (label/label data) of the target model during actual use. The input data refers to input data input into the target model in a use/inference process of the target model to allow the target model to perform inference. The output data can be a prediction (prediction), or can be inference data or inference result data (inference data), that is, output data/a prediction/inference data or the like obtained by inputting a set of input data into the target model to perform calculation/prediction/inference. The label data can be understood as an actual measured value in a real environment and can include a ground truth (ground truth), that is, a correct label value. In general, a set of data can include a set of input data, output data corresponding to the input data, and label data corresponding to the input data.

A situation that triggers the MTLF to send the first data retrieval request to the AnLF may be:
after a period of time, for example, after the target model has been used for a period of time, in a case that the AnLF requests the target model from the MTLF, the MTLF can first request the target data of the target model from the AnLF to calculate the performance information, and then determine, based on the performance information of the target model, whether to perform an operation such as sending the target model;
the target model is used for too long, and as a result, new test data needs to be collected to perform performance information and model update during model training, such as updating target models of different granularities by regions; or
the sending is periodically triggered, and the MTLF is responsible for actively and periodically requesting the target data of the target model.

The first data retrieval request carries at least one of the following:
identification information of an analytics task corresponding to the target model;
condition limiting information of the analytics task, where the condition limiting information indicates a limiting condition of target data of the analytics task;
object information corresponding to the analytics task;
model identification information corresponding to the target model; and
data type information of the target data;
time information of the target data;
location information of the target data; and
first indication information, used to indicate a collection source of the target data expected by the first network-side device, where the collection source of the to-be-processed data includes any one or more of the second network-side device, a fourth network-side device corresponding to the target model, and a third network-side device that stores the target model data.

Step 2: The AnLF determines a method of collecting the target data, which can be specifically determined based on the data type information, time information, location information, and/or first indication information of the target data in the first data retrieval request in step 1. For example, in a case that the first data retrieval request carries the first indication information, a collection source of target data indicated by the first indication information can be used.

Step 3: The AnLF collects related data from the fourth network-side device. The AnLF can determine a target fourth network-side device based on task information. The task information can be carried in the task request sent by the consumer network element in step 0. Then the AnLF retrieves the related data from the target fourth network-side device. The related data retrieved in this step can include input data and/or label data. After collecting the input data, the AnLF can input the input data into the target model, and corresponding output data can be obtained through calculation of the target model.

Step 4: The AnLF sends data storage indication information to the ADRF to store the target data to the ADRF. Specifically, the AnLF sends the target data, including input data, output data, label data, and related information of the target data, such as task information corresponding to the target data, model information corresponding to the target data, and data information corresponding to the target data, to the ADRF through the data storage indication information to let the ADRF store the target data and/or related information of the target data.

The time information corresponding to the target data can help subsequent detection of performance information. For example, the output data of the target model and the label data corresponding to the output data can be associated/bound/mapped by comparing time information corresponding to the output data and time information corresponding to the label data, so as to compare/calculate/generate the performance information. For another example, time range information of these data can be known through the time information corresponding to the input data. The time range information refers to a certain time range. For example, if the time information corresponding to the input data indicates an earliest time of Monday of a certain week and a latest time of Friday of that week, it indicates that a time range of these data is from Monday to Friday of a certain week. This time range can be used to record and ensure the timeliness and the like of the performance information.

In an implementation method, the data storage indication information can be sent through Nadrf_DataManagement_StorageRequest.

Specifically, the data storage indication information sent by the AnLF to the ADRF can include at least one of the following:
input data;
output data;
label data;
time information corresponding to the input data, which can include time point information indicating when the input data is generated, time point information indicating when the input data is obtained, and time point information indicating when the input data is input into the target model;
time information corresponding to the output data, where the time information corresponding to the output data can include time point information indicating when the output data is generated, the time point information can be obtained through the time point when the input data is input into the target model, or can be obtained through the time point when the output data is generated after the input data is input into the target model and the target model completes the calculation; the time information corresponding to the output data can further include target time point information specific to the output data, and the target time point information can be obtained through a target time point corresponding to a task predicted by the output data; and the time information corresponding to the output data can further include an initial time point corresponding to the output data, and the initial time point can be obtained through the time information corresponding to the input data associated with the output data;
time information corresponding to the label data, which can include time point information indicating when the label data is generated and time point information indicating when the label data is obtained;
identification information of an analytics task corresponding to the target model, such as analytics ID, used to indicate that the target data is for a specific task;
condition limiting information of the analytics task, such as analytic filter information, used to indicate filtering information of the target data, such as AOI, S-NSSAI, or DNN;
object information corresponding to the analytics task, such as target of analytic reporting, used to indicate that a data analysis object is a terminal, multiple terminals, or all terminals;
model identification information corresponding to the target model, such as model ID, used to indicate that the target data is for a specific model; and
model filtering information corresponding to the target model, used to indicate a condition that the target model needs to meet, such as AOI, S-NSSAI, or DNN.

Step 5: The ADRF stores the received target data.

Step 6: After completing the storage, the ADRF returns storage completion indication information, for example, feeding back storage identification information of this storage, such as transaction reference ID, to the AnLF to inform it of the successful storage.

Step 7: The AnLF sends storage information to the MTLF, to request the MTLF to help perform detection for the performance information of the target model. In this process, the storage information can specifically include at least one of the following:
identification information of the ADRF, which can specifically be identification information of the network element, such as ID of the network element;
address information of the ADRF, which can specifically be address information of the network element, such as an IP address or FQDN of the network element;
identification information of the AnLF, which can specifically be identification information of the network element, such as ID of the network element;
storage identification information, such as transaction reference ID, which is the storage identification information returned by the ADRF in step 4;
data type information, used to indicate a data type of the target data to be retrieved, such as the data type of terminal location information;
time period information of the target data, used to indicate a time of the target data to be retrieved, which can be a generation time of the data, such as a start time point or an end time point;
location range information corresponding to the target data, used to indicate a location range of the target data to be retrieved, which can be determined based on a location where the data is generated, such as retrieving data within a certain TA or cell.

In addition, the AnLF can further send association information to the MTLF to enable the MTLF to retrieve the target data more accurately. The association information includes but is not limited to:
requirement information of the analysis result of the target model, that is, requirement information of the performance information, for example, a threshold or a preset condition. The model performance requirement information is used to inform the MTLF of acceptable performance information. If the performance information calculated by the MTLF does not meet the model performance requirement information, some subsequent operations are triggered, such as retraining the model, selecting a new model, or informing the AnLF that the model performance declines or does not meet expectations. The model performance requirement information can also be informed to the MTLF when the AnLF sends the model request to the MTLF in step 0.
identification information of the analytics task, such as analytics ID, used to indicate that the target data to be retrieved is for a specific task;
condition limiting information of the analytics task, such as analytic filter information, used to indicate filtering information of the data analysis result, such as AOI, S-NSSAI, or DNN;
object information corresponding to the analytics task, such as target of analytic reporting, used to indicate that a data analysis object is a terminal, multiple terminals, or all terminals;
model identification information, such as model ID, used to indicate that the target data to be retrieved is for a specific model; and
model filtering information, indicating a condition that the model specific to the target data to be retrieved needs to meet, such as AOI, S-NSSAI, or DNN.

Steps 8-9: The MTLF sends a second data retrieval request to the ADRF, to request to retrieve the target data. Specifically, the MTLF determines identification information and address information of a target ADRF based on the information in step 7, and sends the second data retrieval request to the target ADRF to retrieve the target data. After receiving the second data retrieval request, the ADRF feeds back to the MTLF the target data that meets the requirement. For example, the data corresponding to the storage identification information can be found based on the identification information of the AnLF + storage identification information and fed back to the MTLF. In addition, the ADRF determines specific data based on related information of the target data such as a combination of task identification information and model identification information, and feeds it back to the MTLF.

The second data retrieval request can include at least one of the following:
identification information of the AnLF;
storage identification information of the target data;
identification information of the analytics task corresponding to the target data;
task condition limiting information of the analytics task;
object information corresponding to the analytics task;
model identification information corresponding to the target model;
data type information of the target data;
time information of the target data; and
location information of the target data.

Step 10: After retrieving the target data of the target model in the actual environment, the MTLF calculates the performance information to obtain the performance information, and determines subsequent actions based on the performance information. The MTLF can calculate the analysis result by comparing the label data and the output data, and then determine, based on the analysis result, whether the model needs to be retrained or a new model needs to be selected. For example, if the performance information does not meet the model performance requirement corresponding to the model performance requirement information, the model can be retrained or a new model can be selected. Alternatively, the two pieces of information can be compared to determine whether to feed back the performance information to the AnLF. In an embodiment, in a case that the performance information of the target model does not meet the model performance requirement corresponding to the model performance requirement information, the first network-side device feeds back the performance information to the second network-side device. For example, in a case that the performance information does not meet the model performance requirement corresponding to the model performance requirement information, the performance information is fed back to the AnLF, or the AnLF is notified after the performance information is calculated, or the performance information can be periodically fed back.

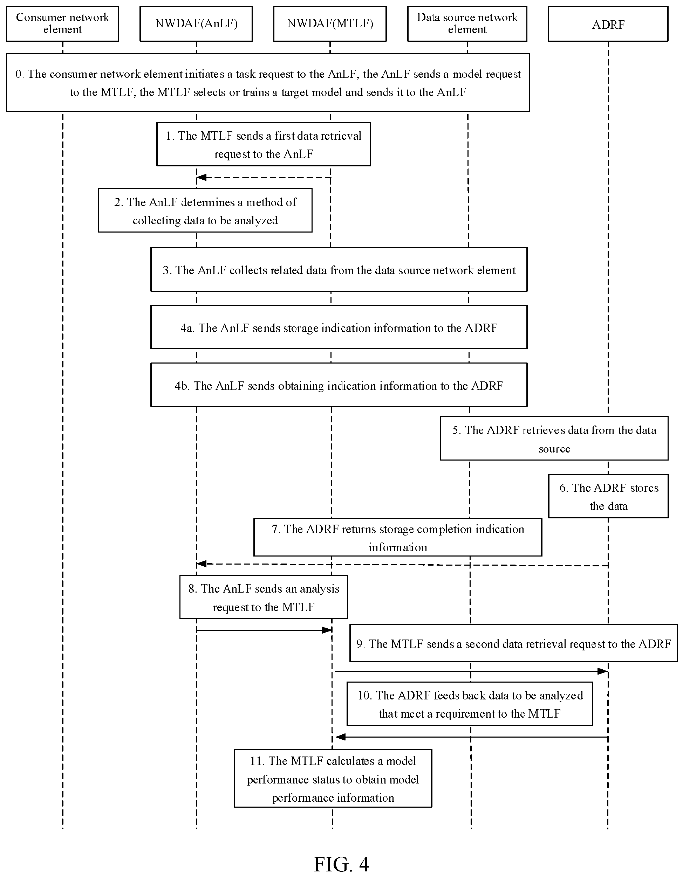

The following describes the embodiments of this application again with another example in FIG. 4. In this example, first data is part of the target data. This example is generally the same as the previous example, with the difference being in steps 3, 4, 5, 8, and 9.

Specifically, in step 3 of this example, the AnLF is not responsible for collecting all related data and may have collected only the input data and the like, such as having collected only the input data and having not collected label data. In step 4, the AnLF not only needs to inform the ADRF to store the target data it has collected (step 4a), such as the input data, but also needs to inform the ADRF to collect and store other target data from a designated fourth network-side device, such as label data (steps 4b and 5).

In a case that the AnLF only informs the ADRF of part of the target data, the AnLF can further send data retrieval indication information to the ADRF, and further indicate the ADRF in step 4b to collect another part of the target data from the fourth network-side device of the target data and store it, which can specifically include at least one of the following:
identification information of the fourth network-side device, such as ID of the network element;
address information of the fourth network-side device, such as an IP address or FQDN of the network element;
data type information of the target data, used to indicate data to be collected, such as terminal location information;
time information of the target data, used to indicate a time of data to be collected, which can be a generation time of the data, such as a start time point or an end time point;
location information of the target data, used to indicate a range of the data to be collected, which can be determined based on a location where the data is generated, such as a certain TA or cell;
collection time information of the target data, used to indicate a time range within which the ADRF collects second data. For example, if the collection duration information indicates one month, the ADRF needs to periodically collect the second data within the next month. The time can alternatively be a past period.

In an embodiment, step 4b can be completed through Nadrf_DataManagement_StorageSubscriptionRequest.

Because step 4b is added, and retrieval identification information is further fed back in step 7, the second data retrieval request in step 8 also needs to include this information so that the MTLF can request corresponding data from the ADRF.

As can be seen from the above, in the technical solution provided by this application, the first network-side device can retrieve the storage information of the target data from the second network-side device, then retrieve the target data, and analyze the target data to obtain the performance information of the target model. Then, accuracy of the target model in a current actual inference process can be determined, so as to adjust subsequent target model-based policy decision making, thereby increasing the accuracy rate of policy decisions made by devices inside and outside a network based on a model inference result of the target model.

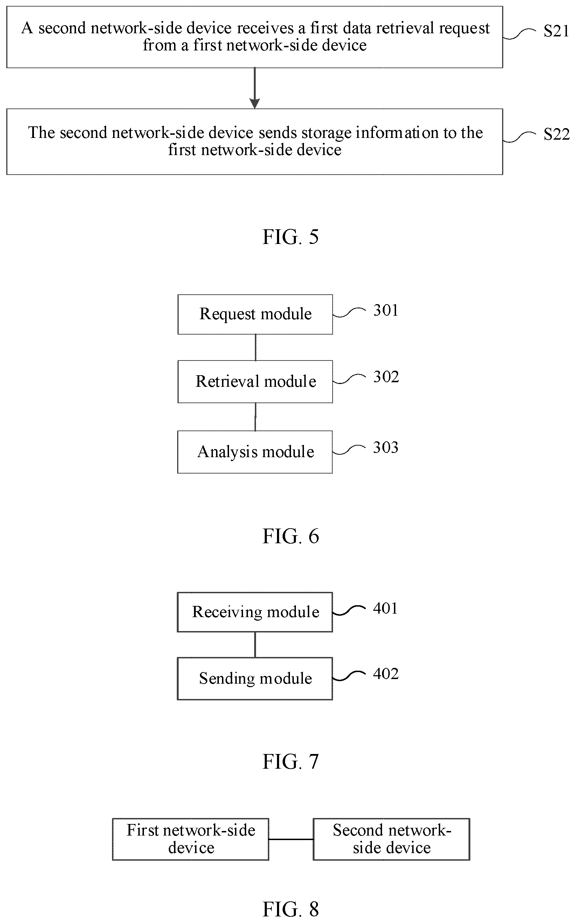

As shown in FIG. 5, an embodiment of this application further provides a data retrieval method including the following steps.

Step S21: A second network-side device receives a first data retrieval request from a first network-side device, where the first data retrieval request is used to request target data, and the target data is used for determining performance information of a target model.

Step S22: The second network-side device sends storage information to the first network-side device, where the storage information is used to indicate the first network-side device to retrieve the target data.

As can be seen from the above, in the technical solution provided by this application, the first network-side device can retrieve the storage information of the target data from the second network-side device, then retrieve the target data, and analyze the target data to obtain the performance information of the target model. Then, accuracy of the target model in a current actual inference process can be determined, so as to adjust subsequent target model-based policy decision making, thereby improving the accuracy rate of policy decisions made by devices inside and outside a network based on a model inference result of the target model. Optionally, the first data retrieval request carries at least one of the following:
identification information of an analytics task corresponding to the target model;
condition limiting information of the analytics task, where the condition limiting information indicates a limiting condition of target data of the analytics task;
object information corresponding to the analytics task;
model identification information corresponding to the target model; and
data type information of the target data;
time information of the target data;
location information of the target data; and
first indication information, used to indicate a collection source of the target data expected by the first network-side device, where the collection source of the target data includes any one or more of the second network-side device, a third network-side device, and a fourth network-side device, the third network-side device is configured to store the target data, and the fourth network-side device is a data source of the target data.

Optionally, the sending, by the second network-side device, storage information to the first network-side device includes:
retrieving, by the second network-side device, the target data; and
sending, by the second network-side device, the storage information to the first network-side device, where the storage information includes the target data.

Optionally, the sending, by the second network-side device, storage information to the first network-side device includes:
retrieving, by the second network-side device, the target data; and
storing, by the second network-side device, the target data to a third network-side device, and sending the storage information to the first network-side device, where the storage information includes indication information of the third network-side device.

Optionally, in a case that the target data includes output data of the target model, the retrieving, by the second network-side device, the target data includes:
retrieving, by the second network-side device, input data of the target model; and
inputting, by the second network-side device, the input data into the target model for processing to obtain corresponding output data.

Optionally, the storing, by the second network-side device, the target data to a third network-side device includes:
sending, by the second network-side device, data storage indication information to the third network-side device, where the data storage indication information carries the target data; and
receiving, by the second network-side device, storage identification information returned by the third network-side device, where the storage identification information is used to indicate successful storage of the target data.

Optionally, the data storage indication information carries at least one of the following:
input data corresponding to the target model;
output data corresponding to the target model;
label data corresponding to the target model;
time information corresponding to the input data;
time information corresponding to the output data;
time information corresponding to the label data;
identification information of an analytics task corresponding to the target model;
condition limiting information of the analytics task, where the condition limiting information indicates a limiting condition of target data of the analytics task;
object information corresponding to the analytics task;
model identification information corresponding to the target model; and
model filtering information corresponding to the target model.

Optionally, the storing, by the second network-side device, the target data to a third network-side device includes:
sending, by the second network-side device, data retrieval indication information to the third network-side device, where the data retrieval indication information is used to indicate the third network-side device to request the target data from the fourth network-side device; and
receiving, by the second network-side device, retrieval identification information returned by the third network-side device, where the retrieval identification information is used to indicate that the third network-side device has retrieved the target data from the fourth network-side device and has stored the target data.

Optionally, the data retrieval indication information carries at least one of the following:
identification information of the third network-side device;
address information of the third network-side device;
data type information of the target data;
time information of the target data;
location information of the target data; and
collection time information of the target data.

Optionally, the sending, by the second network-side device, storage information to the first network-side device includes:
sending, by the second network-side device, the storage information to the first network-side device, where the storage information includes indication information of the fourth network-side device; or
sending, by the second network-side device, the storage information to the first network-side device, where the storage information includes the task information sent by the user equipment; where
the task information is used to indicate that the first network-side device has trained to obtain the target model.

Optionally, the storage information carries at least one of the following:
identification information of a third network-side device;
address information of the third network-side device;
identification information of the second network-side device; and
storage identification information of the target data.

Optionally, the sending, by the second network-side device, storage information to the first network-side device includes:
sending, by the second network-side device, the storage information and association information to the first network-side device; where
the association information includes at least one of the following:
   task identification information of an analytics task corresponding to the target model;
   task condition limiting information of the analytics task;
   object information corresponding to the analytics task;
   model identification information corresponding to the target model; and
   model filtering information corresponding to the target model;
   data type information of the target data;
   time information of the target data;
   location information of the target data.

Optionally, the sending, by the second network-side device, storage information to the first network-side device includes:
sending, by the second network-side device, the storage information and requirement information to the first network-side device, where the requirement information is used to indicate a minimum requirement for the performance information of the target model.

Optionally, the target data includes any one or more of input data, output data, and label data of the target model.

Optionally, the label data corresponding to the target model includes actually generated data associated with the input data and/or output data corresponding to the target model.

For the implementation process of the method embodiment in FIG. 5, reference can be made to the implementation process of the method embodiment in FIG. 2, with the same technical effects achieved. To avoid repetition, details are not described herein again.

The data retrieval method provided in the embodiments of this application can be executed by a data retrieval apparatus. In the embodiments of this application, the data retrieval method being executed by a data retrieval apparatus is used as an example to describe the data retrieval apparatus provided in the embodiments of this application.

FIG. 6 is a structural diagram of a data retrieval apparatus of this application. This application provides a data retrieval apparatus including:
a request module 301 configured to send a first data retrieval request to a second network-side device, where the first data retrieval request is used to request target data, and the target data is used for determining performance information of a target model;
a retrieval module 302 configured to receive storage information from the second network-side device, and retrieve the target data based on the storage information; and
an analysis module 303 configured to analyze the target data to obtain the performance information of the target model.

As can be seen from the above, in the technical solution provided by this application, the first network-side device can retrieve the storage information of the target data from the second network-side device, then retrieve the target data based on the storage data, and analyze the target data to obtain the analysis result that can exhibit the performance information of the target model. It can be understood that the accuracy of the target model in a current actual inference process can be determined based on the analysis result, so as to adjust subsequent target model-based policy decision making, thereby increasing the accuracy rate of policy decisions made by devices inside and outside a network based on a model inference result of the target model. Optionally, the first data retrieval request carries at least one of the following:
identification information of an analytics task corresponding to the target model;
condition limiting information of the analytics task, where the condition limiting information indicates a limiting condition of target data of the analytics task;
object information corresponding to the analytics task;
model identification information corresponding to the target model; and
data type information of the target data;
time information of the target data;
location information of the target data; and
first indication information, used to indicate a collection source of the target data expected by the first network-side device, where the collection source of the to-be-processed data includes any one or more of the second network-side device, a third network-side device, and a fourth network-side device, the third network-side device is configured to store the target data, and the fourth network-side device is a data source of the target data.

Optionally, the storage information carries at least one of the following:
identification information of a third network-side device;
address information of the third network-side device;
identification information of the second network-side device; and
storage identification information of the target data.

Optionally, the target data includes any one or more of input data, output data, and label data of the target model.

Optionally, the label data corresponding to the target model includes actually generated data associated with the input data and/or output data corresponding to the target model.

Optionally, the retrieval module 302 is specifically configured to receive association information from the second network-side device; and retrieve the target data based on the storage information and the association information; where
the association information includes at least one of the following:
task identification information of an analytics task corresponding to the target model;
task condition limiting information of the analytics task;
object information corresponding to the analytics task;
model identification information corresponding to the target model; and
model filtering information corresponding to the target model;
data type information of the target data;
time information of the target data; and
location information of the target data.

Optionally, the analysis module 303 is specifically configured to receive requirement information from the second network-side device, where the requirement information is used to indicate a minimum requirement for the performance information of the target model; and analyze the target data based on the requirement information to obtain the performance information of the target model.

Optionally, the storage information carries at least one of the identification information of the third network-side device, the address information of the third network-side device, the identification information of the fourth network-side device, and the address information of the fourth network-side device.

The retrieval module 302 is specifically configured to:
determine, by the first network-side device, the third network-side device based on the storage information;
send, by the first network-side device, a second data retrieval request for the target data to the third network-side device; and
receive, by the first network-side device, the target data returned by the third network-side device.

Optionally, the second data retrieval request carries at least one of the following:
identification information of the second network-side device;
storage identification information of the target data;
identification information of an analytics task corresponding to the target model;
condition limiting information of the analytics task, where the condition limiting information indicates a limiting condition of target data of the analytics task;
object information corresponding to the analytics task;
model identification information corresponding to the target model;
data type information of the target data;
time information of the target data; and
location information of the target data.

Optionally, the storage information carries the target data, and the retrieval module 302 is specifically configured to:
retrieve, by the first network-side device, the target data based on the storage information.

Optionally, the storage information further carries time period information, the time period information is used to indicate a retrieval time and/or retrieval time range of the target data, and the retrieval module 302 is further configured to:
retrieve, by the first network-side device based on the storage information, the target data at a time corresponding to the time period information.

Optionally, the request module 301 is specifically configured to:
send, by the first network-side device, the first data retrieval request for the target model to the second network-side device after a preset duration elapses after the target model is sent to the second network-side device; or
send, by the first network-side device, the first data retrieval request to the second network-side device according to a preset period.

Optionally, the apparatus further includes:
an execution module configured to: in a case that the performance information meets a preset condition, send, by the first network-side device, the target model to any one device requesting the target model.

Optionally, the apparatus further includes:
an execution module configured to update, by the first network-side device, a model parameter of the target model based on the performance information.

Optionally, the request module 301 is specifically configured to:
send, by the first network-side device, the first data retrieval request to the second network-side device according to a preset period.

The data retrieval apparatus provided in FIG. 6 of this embodiment of this application can implement the processes of the method embodiment in FIG. 2, with the same technical effects achieved. To avoid repetition, details are not described herein again.

FIG. 7 is a structural diagram of a data retrieval apparatus of this application. This application provides a data retrieval apparatus including:
a receiving module 401 configured to receive a first data retrieval request from a first network-side device, where the first data retrieval request is used to request target data, and the target data is used for determining performance information of a target model; and
a sending module 402 configured to send storage information to the first network-side device, where the storage information is used to indicate the first network-side device to retrieve the target data.

As can be seen from the above, in the technical solution provided by this application, the first network-side device can retrieve the storage information of the target data from the second network-side device, then retrieve the target data based on the storage data, and analyze the target data to obtain the analysis result that can exhibit the performance information of the target model. It can be understood that the accuracy of the target model in a current actual inference process can be determined based on the analysis result, so as to adjust subsequent target model-based policy decision making, thereby increasing the accuracy rate of policy decisions made by devices inside and outside a network based on a model inference result of the target model.

Optionally, the first data retrieval request carries at least one of the following:
identification information of an analytics task corresponding to the target model;
condition limiting information of the analytics task, where the condition limiting information indicates a limiting condition of target data of the analytics task;
object information corresponding to the analytics task;
model identification information corresponding to the target model;
data type information of the target data;
time information of the target data; and
location information of the target data; and
first indication information, used to indicate a collection source of the target data expected by the first network-side device, where the collection source of the target data includes any one or more of the second network-side device, a third network-side device, and a fourth network-side device, the third network-side device is configured to store the target data, and the fourth network-side device is a data source of the target data.

Optionally, the sending module 402 is specifically configured to:
retrieve, by the second network-side device, the target data; and
send, by the second network-side device, the storage information to the first network-side device, where the storage information includes the target data.

Optionally, the sending module 402 is specifically configured to:
retrieve, by the second network-side device, the target data; and
store, by the second network-side device, the target data to a third network-side device, and sending the storage information to the first network-side device, where the storage information includes indication information of the third network-side device.

Optionally, in a case that the target data includes output data of the target model, the sending module 402 is specifically configured to:
retrieve, by the second network-side device, input data of the target model; and
input, by the second network-side device, the input data into the target model for processing to obtain corresponding output data.

Optionally, the sending module 402 is specifically configured to:
send, by the second network-side device, data storage indication information to the third network-side device, where the data storage indication information carries the target data; and
receive, by the second network-side device, storage identification information returned by the third network-side device, where the storage identification information is used to indicate successful storage of the target data.

Optionally, the data storage indication information carries at least one of the following:
input data corresponding to the target model;
output data corresponding to the target model;
label data corresponding to the target model;
time information corresponding to the input data;
time information corresponding to the output data;
time information corresponding to the label data;
identification information of an analytics task corresponding to the target model;
condition limiting information of the analytics task, where the condition limiting information indicates a limiting condition of target data of the analytics task;
object information corresponding to the analytics task;
model identification information corresponding to the target model; and
model filtering information corresponding to the target model.

Optionally, the sending module 402 is specifically configured to:
send, by the second network-side device, data retrieval indication information to the third network-side device, where the data retrieval indication information is used to indicate the third network-side device to request the target data from the fourth network-side device; and
receive, by the second network-side device, retrieval identification information returned by the third network-side device, where the retrieval identification information is used to indicate that the third network-side device has retrieved the target data from the fourth network-side device and has stored the target data.

Optionally, the data retrieval indication information carries at least one of the following:
identification information of the third network-side device;
address information of the third network-side device;
data type information of the target data;
time information of the target data;
location information of the target data; and
collection time information of the target data.

Optionally, in a case that the first data retrieval request carries the first indication information and the first indication information indicates that the collection source of the target data includes the fourth network-side device corresponding to the target model, the sending module 402 is specifically configured to:
determine, by the second network-side device based on task information sent by user equipment, the fourth network-side device corresponding to the target model, and send storage information to the first network-side device, where the storage information includes indication information of the fourth network-side device; or
send, by the second network-side device, the storage information to the first network-side device, where the storage information includes the task information sent by the user equipment; where
the task information is used to indicate that the first network-side device has trained to obtain the target model.

Optionally, the storage information carries at least one of the following:
identification information of a third network-side device;
address information of the third network-side device;
identification information of the second network-side device; and
storage identification information of the target data.

Optionally, the sending module 402 is specifically configured to:
send the storage information and association information to the first network-side device; where
the association information includes at least one of the following:
   identification information of an analytics task corresponding to the model;
   condition limiting information of the analytics task, where the condition limiting information indicates a limiting condition of target data of the analytics task;
   object information corresponding to the analytics task;
   model identification information corresponding to the target model;
   model filtering information corresponding to the target model;
   data type information of the target data;
   time information of the target data; and
   location information of the target data.

Optionally, the sending module 402 is specifically configured to send the storage information and requirement information to the first network-side device, where the requirement information is used to indicate a minimum requirement for the performance information of the target model.

Optionally, the target data includes any one or more of input data, output data, and label data of the target model.

Optionally, the label data corresponding to the target model includes actually generated data associated with the input data and/or output data corresponding to the target model.

The data retrieval apparatus provided in FIG. 7 of this embodiment of this application can implement the processes of the method embodiment in FIG. 5, with the same technical effects achieved. To avoid repetition, details are not described herein again.

The data retrieval apparatus in this embodiment of this application can be a terminal device, such as a terminal device with an operating system, or a component in a terminal device, such as an integrated circuit or chip. The terminal device can be a terminal or another device other than the terminal. For example, the terminal may include but is not limited to the types of the terminal 11 listed above, and the other devices may be servers, network attached storage (Network Attached Storage, NAS), or the like, which are not specifically limited in the embodiments of this application.

The data retrieval apparatus provided in this embodiment of this application can implement the processes implemented in the method embodiments in FIG. 2 or 5. To avoid repetition, details are not described herein again.

FIG. 8 is a schematic diagram of a data retrieval system of this application. This application provides a data retrieval system including a first network-side device and a second network-side device, where:
the first network-side device sends a first data retrieval request to the second network-side device, where the first data retrieval request is used to request target data, and the target data is used for determining performance information of a target model;
the second network-side device receives the first data retrieval request and sends storage information to the first network-side device, where the storage information is used to indicate the first network-side device to retrieve the target data;
the first network-side device receives the storage information, and retrieves the target data based on the storage information; and
the first network-side device analyzes the target data to obtain the performance information of the target model.

As can be seen from the above, in the technical solution provided by this application, the first network-side device can retrieve the storage information of the target data from the second network-side device, then retrieve the target data based on the storage data, and analyze the target data to obtain the analysis result that can exhibit the performance information of the target model. It can be understood that the accuracy of the target model in a current actual inference process can be determined based on the analysis result, so as to adjust subsequent target model-based policy decision making, thereby increasing the accuracy rate of policy decisions made by devices inside and outside a network based on a model inference result of the target model.

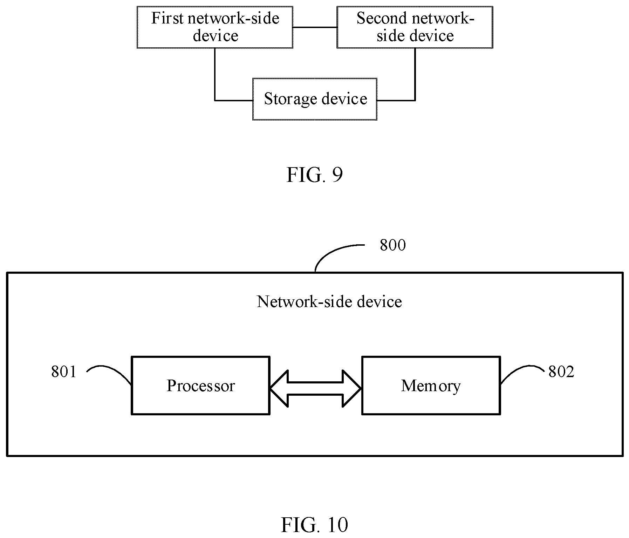

FIG. 9 is a schematic diagram of a data retrieval system of this application. This application provides a data retrieval system including a first network-side device, a second network-side device, and a third network-side device, where:
the first network-side device sends a first data retrieval request to the second network-side device, where the first data retrieval request is used to request target data, and the target data is used for determining performance information of a target model;
the second network-side device receives the first data retrieval request, and sends storage information to the first network-side device;
the first network-side device receives the storage information, and retrieves the target data from the third network-side device based on the storage information; and
the first network-side device analyzes the target data to obtain the performance information of the target model.

As can be seen from the above, in the technical solution provided by this application, the first network-side device can retrieve the storage information of the target data from the second network-side device, then retrieve the target data based on the storage data, and analyze the target data to obtain the analysis result that can exhibit the performance information of the target model. It can be understood that the accuracy of the target model in a current actual inference process can be determined based on the analysis result, so as to adjust subsequent target model-based policy decision making, thereby increasing the accuracy rate of policy decisions made by devices inside and outside a network based on a model inference result of the target model.

Corresponding to the above method embodiment and apparatus embodiment, as shown in FIG. 10, an embodiment of this application further provides a network-side device 800 including a processor 801 and a memory 802. The memory 802 stores a program or an instruction capable of running on the processor 801, and when the program or instruction is executed by the processor 801, the steps of the data retrieval method embodiment are implemented, with the same technical effects achieved. To avoid repetition, details are not described herein again.

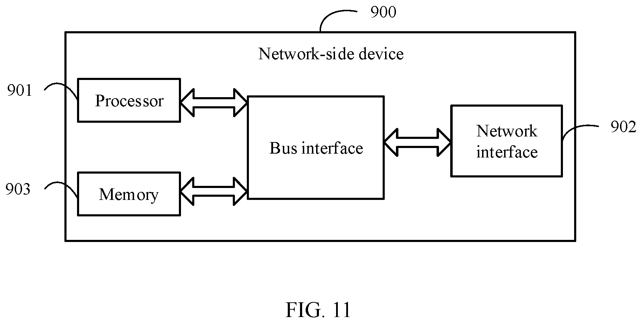

Specifically, an embodiment of this application further provides a network-side device. As shown in FIG. 11, the network-side device 900 includes a processor 901, a network interface 902, and memory 903. The network interface 902 is, for example, a common public radio interface (Common Public Radio Interface, CPRI).

Specifically, the network-side device 900 in this embodiment of the present invention further includes: an instruction or program stored in the memory 903 and executable on the processor 901. The processor 901 invokes the instruction or program in the memory 903 to execute the method executed by the modules shown in FIG. 5 or 7, with the same technical effects achieved. To avoid repetition, details are not described herein again.

An embodiment of this application further provides a readable storage medium. The readable storage medium stores a program or instructions. When the program or instructions are executed by a processor, the processes of the foregoing method embodiment in FIG. 2 or method embodiment in FIG. 5 are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a computer program/program product. The computer program/program product is stored in a storage medium, and the computer program/program product is executed by at least one processor to implement the processes of the foregoing method embodiment in FIG. 2 or method embodiment in FIG. 5, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art can clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than a restrictive. As instructed by this application, persons of ordinary skill in the art may develop many other manners without departing from principles of this application and the protection scope of the claims, and all such manners fall within the protection scope of this application.

Another embodiment of this application further provides a chip. The chip includes a processor and a communication interface, the communication interface is coupled to the processor, and the processor is configured to run a program or instructions to implement the processes of the foregoing embodiments of the data retrieval method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product. The computer program/program product is stored in a storage medium, and the computer program/program product is executed by at least one processor to implement the processes of the foregoing embodiments of the data retrieval method, with the same technical effects achieved. To avoid repetition, details are not described herein again.

An embodiment of this application further provides a data retrieval system including: a terminal and a network-side device. The terminal can be configured to execute the steps of the data retrieval method described above, and the network-side device can be configured to execute the steps of the data retrieval method described above.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially or the part contributing to the prior art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than a restrictive. As instructed by this application, persons of ordinary skill in the art may develop many other manners without departing from principles of this application and the protection scope of the claims, and all such manners fall within the protection scope of this application.

## Claims

1. A data retrieval method, comprising:
sending, by a first network-side device, a first data retrieval request to a second network-side device, wherein the first data retrieval request is used to request target data, and the target data is used for determining performance information of a target model;
receiving, by the first network-side device, storage information from the second network-side device, and retrieving the target data based on the storage information; and
analyzing, by the first network-side device, the target data to obtain the performance information of the target model.

2. The method according to claim 1, wherein the first data retrieval request carries at least one of the following:
identification information of an analytics task corresponding to the target model;
condition limiting information of the analytics task, wherein the condition limiting information indicates a limiting condition of target data of the analytics task;
object information corresponding to the analytics task;
model identification information corresponding to the target model;
data type information of the target data;
time information of the target data;
location information of the target data; and
first indication information, used to indicate a collection source of the target data expected by the first network-side device, wherein the collection source comprises any one or more of the second network-side device, a third network-side device, and a fourth network-side device, the third network-side device is configured to store the target data, and the fourth network-side device is a data source of the target data.

3. The method according to claim 1, wherein the storage information carries at least one of the following:
identification information of a third network-side device;
address information of the third network-side device;
identification information of the second network-side device; and
storage identification information of the target data.

4. The method according to claim 1, wherein the target data comprises any one or more of input data, output data, and label data of the target model.

5. The method according to claim 4, wherein the label data corresponding to the target model comprises actually generated data associated with the input data and/or output data corresponding to the target model.

6. The method according to claim 1, before the retrieving, by the first network-side device, the target data based on the storage information, further comprising:
receiving, by the first network-side device, association information from the second network-side device; and
the retrieving, by the first network-side device, the target data based on the storage information comprises:
retrieving, by the first network-side device, the target data based on the storage information and the association information; wherein
the association information comprises at least one of the following:
task identification information of an analytics task corresponding to the target model;
task condition limiting information of the analytics task;
object information corresponding to the analytics task;
model identification information corresponding to the target model;
model filtering information corresponding to the target model;
data type information of the target data;
time information of the target data; and
location information of the target data.

7. The method according to claim 1, wherein before analyzing, by the first network-side device, the target data to obtain the performance information of the target model, the method further comprises:
receiving, by the first network-side device, requirement information from the second network-side device, wherein the requirement information is used to indicate a minimum requirement for the performance information of the target model.

8. The method according to any one of claims 1 to 7, wherein the storage information carries identification information and/or address information of the third network-side device; and the retrieving, by the first network-side device, the target data based on the storage information comprises:
determining, by the first network-side device, the third network-side device based on the storage information;
sending, by the first network-side device, a second data retrieval request for the target data to the third network-side device; and
receiving, by the first network-side device, the target data returned by the third network-side device.

9. The method according to claim 8, wherein the second data retrieval request carries at least one of the following:
identification information of the second network-side device;
storage identification information of the target data;
identification information of an analytics task corresponding to the target model;
condition limiting information of the analytics task, wherein the condition limiting information indicates a limiting condition of target data of the analytics task;
object information corresponding to the analytics task;
model identification information corresponding to the target model;
data type information of the target data;
time information of the target data; and
location information of the target data.

10. The method according to any one of claims 1 to 7, wherein the storage information further carries time period information, the time period information is used to indicate a retrieval time and/or retrieval time range of the target data, and the retrieving, by the first network-side device, the target data based on the storage information comprises:
retrieving, by the first network-side device based on the storage information, the target data at a time corresponding to the time period information.

11. The method according to any one of claims 1 to 7, wherein the sending, by a first network-side device, a first data retrieval request to a second network-side device comprises:
sending, by the first network-side device, the first data retrieval request for the target model to the second network-side device after a preset duration elapses after the target model is sent to the second network-side device; or
sending, by the first network-side device, the first data retrieval request to the second network-side device according to a preset period.

12. The method according to any one of claims 1 to 7, wherein after the analyzing, by the first network-side device, the target data to obtain the performance information of the target model, the method further comprises:
in a case that the performance information meets a preset condition, sending, by the first network-side device, the target model to any one device requesting the target model.

13. The method according to any one of claims 1 to 7, wherein after the analyzing, by the first network-side device, the target data to obtain the performance information of the target model, the method further comprises:
updating, by the first network-side device, a model parameter of the target model based on the performance information.

14. The method according to any one of claims 1 to 7, wherein after the analyzing, by the first network-side device, the target data to obtain the performance information of the target model, the method further comprises:
feeding back, by the first network-side device, the performance information to the second network-side device in a case that the performance information does not meet a model performance requirement corresponding to model performance requirement information.

15. The method according to any one of claims 1 to 14, the analyzing, by the first network-side device, the target data to obtain the performance information of the target model comprises:
performing, by the first network-side device, calculation on the target data to obtain the performance information of the target model.

16. The method according to any one of claims 1 to 15, wherein the performance information of the target model comprises accuracy rate.

17. The method according to any one of claims 1 to 16, wherein the first network-side device comprises a model training logical function MTLF, and the second network-side device comprises an analysis logical function AnLF.

18. A data retrieval method, comprising:
receiving, by a second network-side device, a first data retrieval request from a first network-side device, wherein the first data retrieval request is used to request target data, and the target data is used for determining performance information of a target model; and
sending, by the second network-side device, storage information to the first network-side device, wherein the storage information is used to indicate the first network-side device to retrieve the target data.

19. The method according to claim 18, wherein the first data retrieval request carries at least one of the following:
identification information of an analytics task corresponding to the target model;
condition limiting information of the analytics task, wherein the condition limiting information indicates a limiting condition of target data of the analytics task;
object information corresponding to the analytics task;
model identification information corresponding to the target model;
data type information of the target data;
time information of the target data;
location information of the target data; and
first indication information, used to indicate a collection source of the target data expected by the first network-side device, wherein the collection source of the target data comprises any one or more of the second network-side device, a third network-side device, and a fourth network-side device, the third network-side device is configured to store the target data, and the fourth network-side device is a data source of the target data.

20. The method according to claim 18, wherein the sending, by the second network-side device, storage information to the first network-side device comprises:
retrieving, by the second network-side device, the target data; and
storing, by the second network-side device, the target data to a third network-side device, and sending the storage information to the first network-side device, wherein the storage information comprises indication information of the third network-side device.

21. The method according to claim 20, wherein in a case that the target data comprises output data of the target model, the retrieving, by the second network-side device, the target data comprises:
retrieving, by the second network-side device, input data of the target model; and
inputting, by the second network-side device, the input data into the target model for processing to obtain corresponding output data.

22. The method according to claim 20, wherein the storing, by the second network-side device, the target data to a third network-side device comprises:
sending, by the second network-side device, data storage indication information to the third network-side device, wherein the data storage indication information carries the target data; and
receiving, by the second network-side device, storage identification information returned by the third network-side device, wherein the storage identification information is used to indicate successful storage of the target data and used to retrieve the target data.

23. The method according to claim 22, wherein the data storage indication information carries at least one of the following:
input data corresponding to the target model;
output data corresponding to the target model;
label data corresponding to the target model;
time information corresponding to the input data;
time information corresponding to the output data;
time information corresponding to the label data;
identification information of an analytics task corresponding to the target model;
condition limiting information of the analytics task, wherein the condition limiting information indicates a limiting condition of target data of the analytics task;
object information corresponding to the analytics task;
model identification information corresponding to the target model; and
model filtering information corresponding to the target model.

24. The method according to claim 20, wherein the storing, by the second network-side device, the target data to a third network-side device comprises:
sending, by the second network-side device, data retrieval indication information to the third network-side device, wherein the data retrieval indication information is used to indicate the third network-side device to request the target data from the fourth network-side device; and
receiving, by the second network-side device, retrieval identification information returned by the third network-side device, wherein the retrieval identification information is used to indicate that the third network-side device has obtained the target data from the fourth network-side device and has stored the target data.

25. The method according to claim 24, wherein the data retrieval indication information carries at least one of the following:
identification information of the third network-side device;
address information of the third network-side device;
data type information of the target data;
time information of the target data;
location information of the target data; and
collection time information of the target data.

26. The method according to claim 18, wherein the storage information carries at least one of the following:
identification information of a third network-side device;
address information of the third network-side device;
identification information of the second network-side device; and
storage identification information of the target data.

27. The method according to claim 18, wherein the sending, by the second network-side device, storage information to the first network-side device comprises:
sending, by the second network-side device, the storage information and association information to the first network-side device; wherein
the association information comprises at least one of the following:
task identification information of an analytics task corresponding to the target model;
task condition limiting information of the analytics task;
object information corresponding to the analytics task;
model identification information corresponding to the target model; and
model filtering information corresponding to the target model;
data type information of the target data;
time information of the target data; and
location information of the target data.

28. The method according to claim 18, wherein the sending, by the second network-side device, storage information to the first network-side device comprises:
sending, by the second network-side device, the storage information and requirement information to the first network-side device, wherein the requirement information is used to indicate a minimum requirement for the performance information of the target model.

29. The method according to claim 18, wherein the target data comprises any one or more of input data, output data, and label data of the target model.

30. The method according to claim 29, wherein the label data corresponding to the target model comprises actually generated data associated with the input data and/or output data corresponding to the target model.

31. The method according to claim 18, wherein the method further comprises:
receiving, by the second network-side device, the performance information fed back by the first network-side device.

32. The method according to any one of claims 18 to 31, wherein the performance information of the target model comprises accuracy rate.

33. The method according to any one of claims 18 to 32, wherein the first network-side device comprises a model training logical function MTLF, and the second network-side device comprises an analysis logical function AnLF.

34. A data retrieval apparatus, comprising:
a request module configured to send a first data retrieval request to a second network-side device, wherein the first data retrieval request is used to request target data, and the target data is used for determining performance information of a target model;
a retrieval module configured to receive storage information from the second network-side device, and retrieve the target data based on the storage information; and
an analysis module configured to analyze the target data to obtain the performance information of the target model.

35. A data retrieval apparatus, comprising:
a receiving module configured to receive a first data retrieval request from a first network-side device, wherein the first data retrieval request is used to request target data, and the target data is used for determining performance information of a target model; and
a sending module configured to send storage information to the first network-side device, wherein the storage information is used to indicate the first network-side device to retrieve the target data.

36. A data retrieval system, comprising a first network-side device and a second network-side device, wherein
the first network-side device sends a first data retrieval request to the second network-side device, wherein the first data retrieval request is used to request target data, and the target data is used for determining performance information of a target model;
the second network-side device receives the first data retrieval request and sends storage information to the first network-side device, wherein the storage information is used to indicate the first network-side device to retrieve the target data;
the first network-side device receives the storage information, and retrieves the target data based on the storage information; and
the first network-side device analyzes the target data to obtain the performance information of the target model.

37. A data retrieval system, comprising a first network-side device, a second network-side device, and a third network-side device, wherein
the first network-side device sends a first data retrieval request to the second network-side device, wherein the first data retrieval request is used to request target data, and the target data is used for determining performance information of a target model;
the second network-side device receives the first data retrieval request, and sends storage information to the first network-side device;
the first network-side device receives the storage information, and retrieves the target data from the third network-side device based on the storage information; and
the first network-side device analyzes the target data to obtain the performance information of the target model.

38. A device comprising a processor and a memory, wherein the memory stores a program or an instruction capable of running on the processor, and when the program or instruction is executed by the processor, the steps of the data retrieval method according to any one of claims 1 to 17 or 18 to 33 are implemented.

39. A readable storage medium, wherein the readable storage medium stores a program and an instruction, and when the program or instruction is executed by a processor, the steps of the data retrieval method according to any one of claims 1 to 17 or 18 to 33 are implemented.
